(19) Europäisches Patentamt
European Patent Office
Office européen des brevets

(11) **EP 4 579 366 B1**

(12) **EUROPEAN PATENT SPECIFICATION**

(45) Date of publication and mention
of the grant of the patent:
**29.07.2026 Bulletin 2026/31**

(21) Application number: **24223298.1**

(22) Date of filing: **26.12.2024**

(51) International Patent Classification (IPC):
**G05B 23/02** (2006.01)

(52) Cooperative Patent Classification (CPC):
**G05B 23/024; F03D 17/0065; G05B 23/0254**

(54) **METHOD AND SYSTEM FOR BAYESIAN REGRESSION-BASED FAULT DETECTION AND DIAGNOSIS IN WIND-TURBINE SENSORS AND ACTUATORS**

VERFAHREN UND SYSTEM ZUR BAYESSCHEN REGRESSIONSBASIERTEN FEHLERERKENNUNG UND -DIAGNOSE IN WINDTURBINENSENSOREN UND -AKTUATOREN

PROCÉDÉ ET SYSTÈME DE DÉTECTION ET DE DIAGNOSTIC DE DÉFAILLANCE BASÉS SUR UNE RÉGRESSION BAYÉSIENNE DANS DES CAPTEURS ET ACTIONNEURS D'ÉOLIENNE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.01.2024 IN 202421000058**

(43) Date of publication of application:
**02.07.2025 Bulletin 2025/27**

(73) Proprietor: **Tata Consultancy Services Limited Maharashtra (IN)**

(72) Inventors:
- **CHATI, YASHOVARDHAN SUSHIL**
  **560066 Bengaluru, Karnataka (IN)**
- **PADULLAPARTHI, VENKATA RAMAKRISHNA**
  **500034 Hyderabad, Telangana (IN)**
- **VASAN, ARUNCHANDAR**
  **600086 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**JP-B2- 5 284 503**

**Description**

CROSS-REFERENCE TO RELATED APPLICATIONS AND PRIORITY

The present application claims priority to Indian application no. 202421000058, filed on January 01, 2024.

TECHNICAL FIELD

The disclosure herein generally relates to fault processing, and, more particularly, to a method and system for a Bayesian regression-based fault detection and diagnosis in wind turbine sensors and actuators.

BACKGROUND

Renewable energy sources have more importance in the context of ever increasing energy demand and adverse impact of fossil fuel on environment. Wind energy is such a renewable energy, which is a clean, non-polluting type of energy. The wind energy is harnessed using wind turbines, which has components such as rotor, blades, generator, and so on. Wind turbines, with all the mechanical components, are prone to failure or faulty operations, and hence require regular checks and maintenance. Faults in sensors and actuators are one of the major contributors to overall faults in wind turbine systems.

As with all mechanical systems, faults in wind turbines have characteristic signatures, which can be detected through sensor data acquisition. The effectiveness of a Fault Detection and Diagnosis (FDD) approach depends on how effectively these signatures are detected from the acquired signals. Conventionally, signal processing techniques have been widely employed for FDD. With the emergence of machine learning (ML), various classification-based models and anomaly detection techniques have gained popularity. In general, FDD methods can be classified into model-based or data-driven approaches. Both approaches map sensed operational data to specific faults. Model-based methods for FDD explicitly build an intermediate dynamics model for turbine operations using dynamical equations or using function approximations like neural networks. Given the sensed system state and inputs, faults are identified as some function of the residuals between model-expected values and observed values during current operation. On the other hand, the data-driven approaches typically classify the observed data (as either faulty or normal) using a machine learning or signal processing pipeline. Specifically, these data-driven methods do not use an intermediate dynamics model for turbine operations.

One disadvantage of the existing approaches is that they focus on fault detection alone and fail to diagnose even if a fault is detected, which adversely affects effectiveness with which maintenance can be performed. They provide little to no further information about the type of fault and its magnitude. Pure data-driven methods do not incorporate knowledge of the underlying system dynamics and may struggle with issues related to labeled data. Another disadvantage of the existing approaches is that they fail to take into consideration uncertainties that arise due to various factors such as, but not limited to, sensor noise and model inaccuracies. Providing a measure of uncertainty associated with a detected fault is important in critical systems where false alarms or missed faults can have significant consequences.

JP 5 284503 B2 discloses a diagnosing system and method for diagnosing failure in the system. Receiving operational data snapshots from a plurality of sensors equipped in the system, generating a reference set from a plurality of the operational data snapshots forming a matrix having the same number of rows as the plurality of sensors and a predetermined number of columns, generating estimated values of the plurality of sensors based on a similarity calculation between a real-time operation data snapshot and the reference set and diagnosing a failure based on the estimated values of the plurality of sensors. Calculating a difference between the estimated values of the plurality of sensors and the real-time operation data snapshot to generate residual data and diagnosis of the failure is performed based on the residual data.

SUMMARY

Embodiments of the present disclosure present technological improvements as solutions to one or more of the above-mentioned technical problems recognized by the inventors in conventional systems. In one embodiment, a processor implemented method is provided. The invention is set out in the appended set of claims 1-4.

In yet another aspect, a system is provided. The invention is set out in the appended set of claims 5-8.

In yet another aspect, a non-transitory computer readable medium is provided. The invention is set out in the appended set of claims 9-12.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for Bayesian regression based fault detection and diagnosis, according to some embodiments of the present disclosure.
FIG. 2 is a flow diagram depicting steps involved in the process of Bayesian regression based fault detection and diagnosis being performed by the system of FIG. 1, according to some embodiments of the present disclosure.
FIG. 3 is an example architecture of the Bayesian regression architecture of the system of FIG. 1 for an example sensor (rotor speed sensor) and actuator (rotor pitch actuator), in accordance with some embodiments of the present disclosure.
FIGS. 4 through 6 depict graphs with example values associated with the Bayesian regression-based fault detection and diagnosis being performed by the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

One disadvantage of the existing approaches is that they focus on fault detection alone, and fail to diagnose even if a fault is detected, which adversely affects effectiveness with which maintenance can be performed. They provide little to no further information about the type of fault and its magnitude. Pure data-driven methods do not incorporate knowledge of the underlying system dynamics and may struggle with issues related to labeled data. Another disadvantage of the existing approaches is that they fail to take into consideration uncertainties that arise due to various factors such as, but not limited to, sensor noise and model inaccuracies. Providing a measure of uncertainty associated with a detected fault is important in critical systems where false alarms or missed faults can have significant consequences.

In order to solve the aforementioned challenges, embodiments disclosed herein provide a method and system for a Bayesian regression-based fault detection and diagnosis in wind turbine sensors and actuators. The system performs the following steps for the Bayesian regression-based fault detection and diagnosis in wind turbine sensors and actuators:- collect data from a wind turbine as input data; generate, via the one or more hardware processors, a plurality of prime values associated with one or more parameters of the input data, by processing the input data using a dynamics model, wherein the plurality of prime values are an estimate of actual values of the one or more parameters of the input data; determine, using a fault model via the one or more hardware processors, correlation of a measured value of the one or more parameters of the input data with the associated prime values in presence of a plurality of fault signatures; determine a likelihood function, via the one or more hardware processors, wherein the likelihood function indicates probability of the measured value of the one or more parameters given the associated prime values and fault signatures; generate, using the Bayesian inference model via the one or more hardware processors, a posterior information by combining the likelihood function with a prior information, wherein the posterior information is an updation of the prior information in light of one or more new observations indicated in the likelihood function; and generate, via the one or more hardware processors, one or more fault signature distributions and associated magnitude and uncertainty, by processing the posterior information, wherein the one or more fault signature distributions is indicative of one or more probable faults in a sensor or actuator. The system addresses the cited challenge with the existing approaches by facilitating diagnosis of detected faults which gives their types and magnitudes. The system also takes into consideration various factors/parameters that contribute to uncertainties, thereby addressing another disadvantage of the existing approaches.

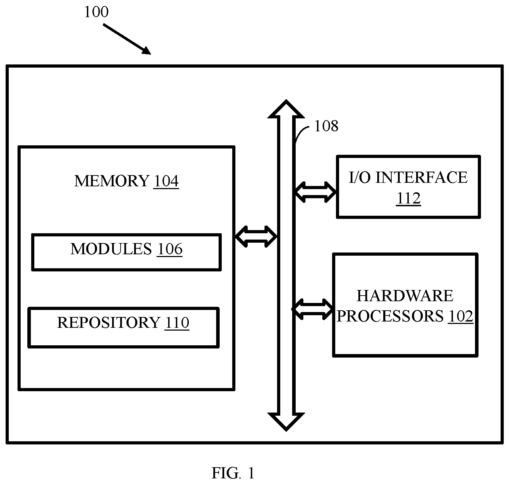

Referring now to the drawings, and more particularly to FIG. 1 through FIG. 6, where similar reference characters denote corresponding features consistently throughout the figures, there are shown preferred embodiments and these embodiments are described in the context of the following exemplary system and/or method.

Table. 1 :- Notations Used

| Symbol | Meaning |
|---|---|
| $\mathcal{A}$ | Model of wind turbine dynamics |
| $\mathcal{B}$ | Baseline classification model |
| $B$ | Gearbox ratio |

(continued)

| Symbol | Meaning |
|---|---|
| $C_q$ | Rotor torque coefficient |
| clip($x,a,b$) | Clip fuction $\triangleq$ max(min($x,b$),$a$) |
| $E$ | Energy |
| $\mathcal{F}$ | Fault formulation model |
| $I$ | Integral rotor speed error in pitch control, rad |
| $J$ | Moment of inertia, $\text{kgm}^2$ |
| $K_g$ | Generator constant |
| ($K_P$, $K_I$, $\theta_k$) | Rotor pitch controller constants |
| $\mathcal{L}$ | Likelihood function |
| $\mathcal{N}$ ($\mu,v^2$) | Normal distribution with mean $\mu$ and variance $v^2$ |
| $P$ | Power |
| $p$ | Probability distribution |
| $\mathcal{R}$ | Rotor radius, m |
| $\mathbf{s}$ | Wind turbine state vector |
| ($\mu,v^2,a,b$) | Truncated normal distribution with mean parameter $\mu$, variance parameter $v^2$, lower bound $a$, and upper bound $b$ |
| $t$ | Time, s |
| $u$ | Incoming wind speed at rotor, m/s |
| $\alpha$ | Fault signature |
| $\Gamma$ | Rotor yaw, degree |
| $\gamma$ | Rotor pitch rate limit, degree/s |
| $\Delta t$ | Pitch controller time step, s |
| $\eta$ | Efficiency |
| $\theta$ | Rotor pitch, degree |
| $\lambda$ | Rotor tip-speed ratio |
| $\rho$ | Air density, $\text{kgm}^{-3}$ |
| $\sigma$ | Proportional rotor speed error in pitch control, rad/s |
| $T$ | Torque, Nm |
| $\omega$ | Rotational speed, rad/s or RPM |
| Subscripts | |
| $b$ | For gearbox |
| $g$ | For generator |
| $H$ | In hardware |
| max | Maximum value of parameter |
| min | Minimum value of parameter |
| $r$ | For rotor |
| rated | Rated value |
| $S$ | In software |
| $t$ | At time index = $t$ |
| $\theta$ | For rotor pitch (actuator) |
| $\omega$ | For rotor rotational speed (sensor) |
| Superscripts | |
| (1) | Gain |
| (2) | O set |
| (3) | Relative noise |
| ' | True value |
| ^ | Estimated value |

(continued)

| Superscripts | |
|---|---|
| . | Time derivative |
| $\mathcal{D}$ | Data-driven |
| $\mathcal{M}$ | Mathematical equations-driven |

FIG. 1 illustrates an exemplary system for Bayesian regression-based fault detection and diagnosis, according to some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of the Bayesian regression-based fault detection and diagnosis in wind turbine sensors and actuators. The plurality of modules 106, amongst other things, can include routines, programs, objects, components, and data structures, which performs particular tasks or implements particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the Bayesian regression-based fault detection and diagnosis in wind turbine sensors and actuators. In an embodiment, terms 'wind turbine' and 'wind-turbine' are used interchangeably.

The data repository (or repository) 110 may include a plurality of abstracted piece of code for refinement and data that is processed, received, or generated as a result of the execution of the plurality of modules in the module(s) 106.

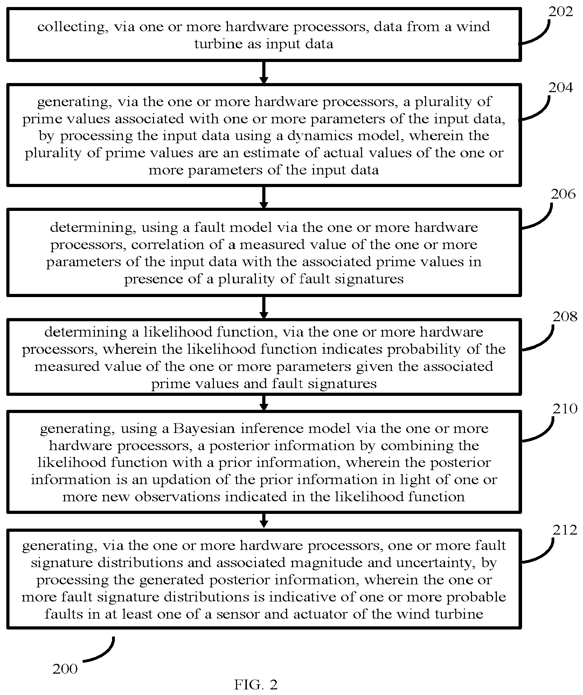

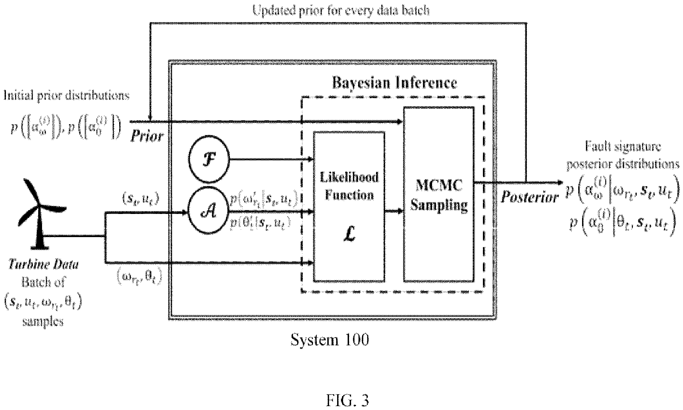

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagram in FIG. 2, and the architecture diagram in FIG. 3.

At step 202 of method 200 in FIG. 2, the system 100 collects, via the one or more hardware processors 102, data from a wind turbine as input data. The input data include values of parameters such as, but not limited to, a plurality of state parameters ($s_t$), wind data ($u_t$), and measurement outputs from the faulty sensor or actuator under consideration (rotor speed information ($\omega_{rt}$), and rotor pitch information ($\theta_t$) in the current example). In an embodiment, the system 100 collect the input data directly from one or more systems associated with the wind turbine or from any other data source.

Further, at step 204 of the method 200, the system 100 generates, via the one or more hardware processors 102, a plurality of prime values associated with one or more parameters of the input data, by processing the input data using a dynamics model. The plurality of prime values are an estimate of actual values of the one or more parameters of the input data which are relevant to the faulty sensor or actuator under consideration. The actual values are also referred to as 'model-expected values'. Details of the dynamic model are given below.

Dynamics model:-

For the example of a faulty rotor speed sensor and pitch actuator under consideration, a model-based fault inference approach requires a model $\mathcal{A} = (\mathcal{A}_\omega, \mathcal{A}_\theta)$ to estimate wind turbine dynamics. The model $\mathcal{A}_\omega$ estimates the true value of the rotor speed $\omega_r'$ that is erroneously reported as $\omega_r$ by the faulty rotor speed sensor. Likewise, the model $\mathcal{A}_\theta$ estimates the true value of the rotor pitch $\theta''$ commanded by a pitch PI controller, which is wrongly set as $\theta$ by the faulty pitch actuator. Thus, given the wind turbine state vector $s_t$ and the input wind speed $u_t$, model $\mathcal{A}_\omega$, gives the probability distribution

$$p\left(\omega_{r_t}'\mid s_t, u_t; \mathcal{A}_\omega\right)$$

and model $\mathcal{A}_\theta$ gives the probability distribution

$$p\left(\theta_t'\mid s_t, u_t; \mathcal{A}_\theta\right).$$

The Dynamics model used by the system 100 is such a model $\mathcal{A} = (\mathcal{A}_\omega, \mathcal{A}_\theta)$. The Dynamics model can be developed using wind turbine dynamics equations, giving rise to a mathematical (analytical) dynamics model

$$\mathcal{A}^{\mathcal{M}} =$$

$$\left(\mathcal{A}_\omega^{\mathcal{M}}, \mathcal{A}_\theta^{\mathcal{M}}\right).$$

If such dynamics equations are unavailable, a completely data-driven model

$$\mathcal{A}^{\mathcal{D}} = \left(\mathcal{A}_\omega^{\mathcal{D}}, \mathcal{A}_\theta^{\mathcal{D}}\right)$$

is developed using neural networks as function approximators to the wind turbine dynamics. In this approach, data from the fault-free operation of the rotor speed sensor or the pitch actuator are used to train

$$\mathcal{A}_\omega^{\mathcal{D}}$$

and

$$\mathcal{A}_\theta^{\mathcal{D}},$$

respectively.

Further, at step 206 of the method 200, the system 100 determines, using a fault model via the one or more hardware processors 102, correlation of a measured value of the one or more parameters of the input data with the associated prime values in presence of a plurality of fault signatures. The one or more fault signature distributions capture a plurality of different types of faults associated with at least one of a sensor or actuator of the wind turbine. Details of the fault model are given below.

Fault model: -

A sensor is faulty when a measured output of the sensor deviates from a true value of the variable it is measuring, beyond some tolerance. Similarly, an actuator is faulty if the actuated output deviates from its commanded input. Refer to the table below.

Table 2: Fault types and associated signatures

| Fault type | Fault signatures |
|---|---|
| No fault (ideal) | $\alpha^{(1)} = 1$; $\alpha^{(2)} = 0$; $\alpha^{(3)} = 0$ |
| Gain | $\alpha^{(1)} /= 1$ |
| Offset | $\alpha^{(2)} /= 0$ |
| Stuck-at fault | $\alpha^{(1)} = 0$ |
| High noise | High $\alpha^{(3)}$ beyond acceptable limits |
| Drifts | $\alpha^{(i)}$ (for $i$ = 1,2,3) vary with time |

Faulty signal of a general parameter $\psi$ at time $t$ is modeled as

$$\psi_t \sim \text{clip}(\mathcal{N}\ (\alpha_t^{(1)}\psi_t' + \alpha_t^{(2)}, (\alpha_t^{(3)}\psi_t')^2), \psi_{\text{min}t}, \psi_{\text{max}t}) \qquad \text{--- (1)}$$

Here, $\psi_t'$ is the true input to the sensor or actuator and $\psi_{\text{min}t}$ and $\psi_{\text{max}t}$ are the lower and upper bounds on $\psi_t$ respectively. $\alpha_t^{(1)}$, $\alpha_t^{(2)}$, $\alpha_t^{(3)}$ are the gain, offset, and relative noise fault signatures respectively. Depending on the values of the fault signatures $\alpha^{(i)}$ (for $i$ = 1,2,3), the general fault formulation in Equation (1) can incorporate various types of faults in sensors and actuators as given in Table 2.

In the method 200, general fault formulation model in (1) is contextualized to faults in the (rotor speed) sensor and the (rotor pitch) actuator. It is assumed that the faults in the sensor and the actuator are independent of each other. For simplification, the fault signatures ($[\alpha^{(1)}, \alpha^{(2)}, \alpha^{(3)}]$) are assumed to not vary with time i.e., there is no drift. Accordingly, two independent fault formulation models $\mathcal{F}_\omega$ and $\mathcal{F}_\theta$ relate the faulty sensed/actuated quantities of $\omega_{r_t}$ and $\theta_t$ to the respective true (i.e., prime) inputs $\omega_{r_t}'$ and $\theta_t'$ and the fault signatures as follows:

$$\mathcal{F}_\omega: \omega_{r_t} \sim clip\left(\mathcal{N}\left(\alpha_\omega^{(1)}\omega_{r_t}' + \alpha_\omega^{(2)}, \left(\alpha_\omega^{(3)}\omega_{r_t}'\right)^2\right), \omega_{min}, \omega_{max}\right) \qquad \text{--- (2)}$$

$$\mathcal{F}_\theta: \theta_t \sim clip\left(\mathcal{N}\left(\alpha_\theta^{(1)}\theta_t' + \alpha_\theta^{(2)}, \left(\alpha_\theta^{(3)}\theta_t'\right)^2\right), \max(\theta_{min}, \theta_{t-1} - \gamma\Delta t), \min(\theta_{max}, \theta_{t-1} + \gamma\Delta t)\right) \qquad \text{--- (3)}$$

Here, $\omega_{min}$, and $\omega_{max}$ are the time-independent lower and upper bounds on the rotor speed, respectively.

Thus, models $\mathcal{F}_\omega$ and $\mathcal{F}_\theta$ give the probability distributions $p\left(\omega_{r_t} \mid \omega_{r_t}', \left[\alpha_\omega^{(1)}, \alpha_\omega^{(2)}, \alpha_\omega^{(3)}\right]; \mathcal{F}_\omega\right)$ and $p\left(\theta_t | \theta_t', \left[\alpha_\theta^{(1)}, \alpha_\theta^{(2)}, \alpha_\theta^{(3)}\right]; \mathcal{F}_\theta\right)$, respectively.

Further, at step 208 of the method 200, the system 100 determines a likelihood function, via the one or more hardware processors 102. The likelihood function indicates probability of the measured value of the one or more faulty parameters under consideration given the associated prime values and fault signatures. Under the dynamics and fault formulation models described above, mixtures of censored Gaussian distributions are used to determine these likelihood functions.

Further, at step 210 of the method 200, the system 100 generates, using the Bayesian inference model used in the Bayesian regression approach used by the one or more hardware processors 102, a posterior information by combining the likelihood function with a prior information. The posterior information is an updation of the prior information in light of one or more new observations indicated in the likelihood function. Further, at step 212 of the method 200, the system 100 generates, via the one or more hardware processors 102, one or more fault signature distributions and associated magnitude and uncertainty, by processing the posterior information. The one or more fault signature distributions is indicative of one or more probable faults. In an embodiment, the one or more probable faults are in one or more sensors or actuators of the wind turbine.

The Bayesian inference approach used in steps 210 and 212 is elaborated below:

The Bayesian inference model is a statistical method for updating (prior) beliefs about a random parameter based on new evidence or observed data. Bayesian inference begins with a known/assumed prior probability distribution which represents the initial estimate of the parameter prior to receiving any actual data. As new observations/measurements come, the likelihood function indicates how the new data are distributed given different values of the parameter, i.e., the likelihood function quantifies the probability of observing the new data under suitable assumptions on the parameter. The posterior information includes probability distribution of each of these parameters, and is obtained by combining the prior information with the likelihood function. The posterior information represents the updated belief/estimate of a parameter being considered, after incorporating the new data. At this step, the system 100 obtains posterior distributions of the fault signatures $\alpha^{(i)}$ (for $i$ = 1,2,3).

The system 100 use Bayes' theorem to obtain the posterior information distribution. Specifically, the system 100 obtains the probability distributions of the fault signatures, posterior to observing the sensed/actuated value of the signals of interest $\omega_{r_t}$ or $\theta_t$ along with the input wind speed $u_t$ and the turbine state vector $\mathbf{s_t}$ under dynamics $\mathcal{A}$ and fault formulation $\mathcal{F}$ models. The system 100 approximates these distributions at a given time $t$ as:

$$p\left(\alpha_\omega^{(i)} \mid \omega_{r_t}, s_t, u_t; \mathcal{A}_\omega, \mathcal{F}_\omega\right) \approx$$

$$\int_{\alpha_\omega^{(j)\neq(i)}} \frac{p\left([\alpha_\omega^{(1)}, \alpha_\omega^{(2)}, \alpha_\omega^{(3)}]\right)}{p(\omega_{r_t} \mid s_t, u_t)} \mathcal{L}\left(\omega_{r_t} \mid \omega_{r_t}', \alpha_\omega^{(1)}, \alpha_\omega^{(2)}, \alpha_\omega^{(3)}\right) d\alpha_\omega^{(j)\neq(i)} \qquad \text{--- (4)}$$

$$p\left(\alpha_\theta^{(i)} \mid \theta_t, s_t, u_t; \mathcal{A}_\theta, \mathcal{F}_\theta\right) \approx$$

$$\int_{\alpha_\theta^{(j)\neq(i)}} \frac{p\left([\alpha_\theta^{(1)}, \alpha_\theta^{(2)}, \alpha_\theta^{(3)}]\right)}{p(\theta_t \mid s_t, u_t)} \mathcal{L}\left(\theta_t \mid \theta_t', \alpha_\theta^{(1)}, \alpha_\theta^{(2)}, \alpha_\theta^{(3)}\right) d\alpha_\theta^{(j)\neq(i)} \qquad \text{--- (5)}$$

$$for\ i = 1, 2, 3$$

Prior distributions: Bayesian methods require assigning appropriate prior distributions to the six fault signatures being inferred, which are represented by $p\left([\alpha_\omega^{(1)}, \alpha_\omega^{(2)}, \alpha_\omega^{(3)}]\right)$ and $p\left([\alpha_\theta^{(1)}, \alpha_\theta^{(2)}, \alpha_\theta^{(3)}]\right)$ in Equations (4) and (5). These priors could be knowledge-driven or historical data-driven.

In Equations (4) and (5), $\mathcal{L}\left(\omega_{r_t} \mid \omega_{r_t}', \alpha_\omega^{(1)}, \alpha_\omega^{(2)}, \alpha_\omega^{(3)}\right)$ and $\mathcal{L}\left(\theta_t \mid \theta_t', \alpha_\theta^{(1)}, \alpha_\theta^{(2)}, \alpha_\theta^{(3)}\right)$ are the respective likelihood functions of the sensed rotor speed and the actuated rotor pitch. Mixtures (as estimates of $\omega_{r_t}'$ and $\theta_t'$ could have uncertainty) of censored (as $\omega_{r_t}$ and $\theta_t$ are clipped within a range) Gaussian distributions are used to model the likelihood functions. The likelihood functions are computed from the turbine dynamics model $\mathcal{A}$ and the fault formulation model $\mathcal{F}$.

Apart from the prior distributions and the likelihood functions, computation of the posterior distributions also requires determination of the terms $p(\omega_{r_t} \mid \mathbf{s_t}, u_t)$ and $p(\theta_t \mid \mathbf{s_t}, u_t)$ in Equations (4) and (5). These terms are difficult to compute analytically and hence, the system 100 may use numerical methods to approximate the posterior distributions of the fault signatures. The Bayesian inference uses a Markov Chain Monte Carlo (MCMC) sampling mechanism to approximate the posterior distributions of the fault signatures. In an embodiment, MCMC is used as an example, and the system 100 may use any other suitable approach for the purpose of approximating the posterior distributions.

Using MCMC, the system 100 obtains samples from the posterior distributions of the fault signatures. In MCMC, samples are generated as a chain with each subsequent sample depending on its previous sample. The system 100, using the sampling algorithm, drives the stationary distribution of the chain to converge to the desired posterior distribution so that after convergence, the chain samples are samples from the desired posterior distribution.

Experimental Data:

1. Implementation:

This section presents the dataset generation and the implementation details of the Bayesian approach used by the system 100. A data-driven binary classifier baseline model is used for comparison, and certain evaluation metrics are discussed.

a. Datasets Used:

For the experiments, simulated data was used to develop and evaluate the different inference methods. Two types of simulated datasets were generated: (1) an ideal dataset, and (2) a realistic dataset.
i. Ideal dataset:- This dataset was generated by simulating a reference offshore NREL 5 MW turbine model, with different combinations of synthetically injected fault signatures in rotor speed sensor and pitch actuator. Apart from possible faults in these two ($\omega_r$, $\theta$) systems that were sought to be inferred, the data was assumed to come from a perfectly healthy turbine without any real-world issues like sensor noise, missing data, etc. (hence the name 'ideal'). This was the primary dataset used to develop the inference methods. First, 3 months worth of wind data (speed, direction) were obtained from a real-world wind farm met mast. These wind data was available at a 10 minute resolution. Because turbine control usually takes place in the order of seconds, Kaimal spectrum technique was used to obtain a 1 Hz sampling of wind data from the 10 minute samples. Starting with the wind speed as input, turbine dynamics equations and fault formulation mod-

els $\mathcal{F}_\omega$, $\mathcal{F}_\theta$ were used to simulate turbine operational data at 1 s intervals with possible faults in the rotor speed sensor or the pitch actuator. The bounds used for the rotor speed ($\omega_{min}$, $\omega_{max}$) were (0,$\infty$) rad/s; and for the pitch ($\theta_{min}$, $\theta_{max}$) were ($0^O$, $25^O$). The upper limit on the rate of change of the actuated pitch was taken as $\gamma$ = 5°/s and the pitch controller timestep $\Delta t$ is 1 s. 100 different faults were injected, one at a time, each with a unique combination of fault signatures. Each unique fault combination was obtained by randomly sampling the fault signatures (the gain $\alpha^{(1)}$, offset $\alpha^{(2)}$, and relative noise $\alpha^{(3)}$) from their respective ranges, summarized in Table 3. The faults were injected at $t$ = 1 s. This results in the creation of 100 different faulty datasets. Additionally, 200 special datasets were also generated, 100 each for the two special cases where only one of the two systems is faulty, i.e., only speed sensor is faulty (with varying fault signatures) but pitch actuator is not faulty, and vice-versa. These datasets were used to train the neural network-based dynamics models $\mathcal{A}^D$.

Table 3: Fault signature ranges for data generation

| Fault signature | Rotor speed sensor | Rotor pitch actuator |
|---|---|---|
| Gain | $\alpha_\omega^{(1)} \in \{0, 1, 2\}$ | $\alpha_\theta^{(1)} \in \{0, 1, 2\}$ |
| Offset | $\alpha_\omega^{(2)} \in \{-1.5, 0, 1.5\}$ rad/s | $\alpha_\theta^{(2)} \in \{-2, 0, 2\}^o$ |
| Relative noise | $\alpha_\omega^{(3)} \in \{0, 0.05, 0.1\}$ | $\alpha_\theta^{(3)} \in \{0, 0.05, 0.1\}$ |

ii. Realistic dataset:- Because the ideal dataset described above is too good to realize in practice, a 'realistic' dataset was also simulated to mimic some data problems seen in real-world operation. While there may be many issues in real-world operation, two are considered as an example here - noisy measurements and missing data. 100 different faulty datasets were generated with faults in the rotor speed sensor or the rotor pitch actuator in a manner similar to that used to generate the ideal dataset. However, unlike the ideal dataset, a 3% zero-mean Gaussian noise was added to all sensor measurements to mimic noisy data. Data points were also dropped at random at different time instants with a small probability to mimic missing data. Moreover, 200 special realistic datasets were also generated, 100 each for the case when the speed sensor is faulty but the pitch actuator is not faulty, and vice versa, to train neural network-based dynamics models $\mathcal{A}^D$ on realistic data. As both the ideal and realistic datasets were simulated, they can serve as the ground-truth for evaluating the different inference methods as the true values of the injected fault signatures were known.

b. Inference methods

Two inference methods $I\mathcal{M}$ and $I\mathcal{D}$ were developed, which differ in the type of dynamics model used ( $\mathcal{A}^{\mathcal{M}}$ and $\mathcal{A}^{\mathcal{D}}$, respectively). Both the methods use the same fault formulation model $\boldsymbol{\mathcal{F}} = ( \mathcal{F}_{\omega}, \mathcal{F}_{\theta})$.

i. Method $I\mathcal{M}$

This inference method uses the analytical dynamics model

$$\mathcal{A}^{\mathcal{M}} =$$

$$\left( \mathcal{A}^{\mathcal{M}}_{\omega}, \mathcal{A}^{\mathcal{M}}_{\theta} \right)$$

based on the wind turbine dynamics equations. Use of mathematical equations in $\mathcal{A}^{\mathcal{M}}$ leads to deterministic estimates of the true rotor speed $\omega'_{r_t}$ and the true commanded pitch $\theta'_t$ given the observed state $\mathbf{s_t}$ and windspeed $u_t$.

ii. Method $I\mathcal{D}$

The dynamics model used in this inference method was the data-driven model

$$\mathcal{A}^{\mathcal{D}} = \left( \mathcal{A}^{\mathcal{D}}_{\omega}, \mathcal{A}^{\mathcal{D}}_{\theta} \right).$$

Models

$$\mathcal{A}^{\mathcal{D}}_{\omega},$$

and

$$\mathcal{A}^{\mathcal{D}}_{\theta}$$

were developed using neural networks to estimate $\omega'_{r_t}$ and $\theta'_t$. Sequential neural networks with dropout after each hidden layer were used to train these models on the ideal or realistic datasets. Table 4 shows the input features, target outputs, and details of the neural network scheme.

Table 4: Details for training data-driven models $\mathcal{A}^{\mathcal{D}}$ using sequential neural networks (NN) with dropout on the ideal and realistic datasets. The NN architecture is represented by a tuple of number of nodes in (input, hidden, output) layers

|  | Ideal dataset | | Realistic dataset | |
|---|---|---|---|---|
|  | $\mathcal{A}^{\mathcal{D}}_{\omega}$ | $\mathcal{A}^{\mathcal{D}}_{\theta}$ | $\mathcal{A}^{\mathcal{D}}_{\omega}$ | $\mathcal{A}^{\mathcal{D}}_{\theta}$ |
| Target output | $\omega'_{r_t}$ | $\theta'_t$ | $\omega'_{r_t}$ | $\theta'_t$ |
| Input features | $u_t, \omega'_{r_{t-1}}$ $\mathcal{T}_{g_{t-1}},$ | $\omega_{r_t}$ $\theta'_{t-1}, \hat{l}_t$ | $\Delta^a_t, u_t$ $\omega'_{r_{t-1}} \mathcal{T}_{g_{t-1}},$ | $\Delta^a_t, \omega_{r_t}$ $\theta'_{t-1}, \hat{l}_t$ |

(continued)

| Table 4: Details for training data-driven models $\mathcal{A}^{\mathcal{D}}$ using sequential neural networks (NN) with dropout on the ideal and realistic datasets. The NN architecture is represented by a tuple of number of nodes in (input, hidden, output) layers | | | | |
|---|---|---|---|---|
| | Ideal dataset | | Realistic dataset | |
| | $\mathcal{A}^{\mathcal{D}}_{\omega}$ | $\mathcal{A}^{\mathcal{D}}_{\theta}$ | $\mathcal{A}^{\mathcal{D}}_{\omega}$ | $\mathcal{A}^{\mathcal{D}}_{\theta}$ |
| NN architecture<br>No. of training samples | $\theta_{t\text{-}1}$<br>(4, 25, 1)<br>22,680 | (3,20, 1) | $\theta_{t\text{-}1}$<br>(5, 25, 1)<br>21,538 | (4, 20, 1) |
| Mini-batch size<br>Dropout probability<br>Hidden/output activation<br>No. of training epochs<br>Loss function<br>Optimizer (learning rate) | 453<br>0.05<br>ReLU/Linear<br>1,000<br>Mean Squared Error<br>Adam (1e-4) | | 430 | |

The models

$$\mathcal{A}^{\mathcal{D}}_{\omega},$$

*and*

$$\mathcal{A}^{\mathcal{D}}_{\theta}$$

were trained on the 200 special datasets generated, where the rotor speed sensor and the pitch actuator are fault-free, respectively. It should be noted that in the ideal dataset, fault-free operation of the speed sensor or the pitch actuator results in , $\omega'_{r_t} = \omega_{r_t}$ or $\theta'_t = \theta_{t}$, respectively. However, the same cases in the realistic dataset imply $\omega'r_t \approx \omega_{r_t}$ or $\theta'_t \approx \theta_t$. The approximations arise due to the presence of measurement noise in the realistic dataset. For the realistic dataset, $\Delta^{\alpha}t$, which is the time difference between two consecutive available samples, was also included as an additional input feature for the neural networks. This is because unlike the ideal dataset where there are no missing data samples, the realistic dataset contains missing data resulting in a $\Delta^{\alpha}t$ that varied across samples and is not necessarily 1 s. $\hat{I}_t$ is an estimate of the integral rotor speed error derived from the basic understanding of a PI controller. The models recursively estimate their respective outputs in a sequential timestep-wise fashion (i.e., for *t* followed by *t*+1). Monte Carlo (MC) Dropout was used to get samples of the estimated outputs instead of simple point estimates. Doing so enabled to obtain the output distributions

$$p\big(\omega'_{r_t}|\, s_t, u_t; \mathcal{A}^{\mathcal{D}}_{\omega}\big)$$

and

$$p\big(\theta'_t|\, s_t, u_t; \mathcal{A}^{\mathcal{D}}_{\theta}\big)$$

which helped in incorporating prediction uncertainty in the dynamics models. This prediction uncertainty could be used to estimate uncertainty in the inferred fault signatures downstream more accurately.

c. Prior distributions and likelihood functions

Initialization of priors before starting any inference was done through domain knowledge of the typical values of fault signatures. Without any information about the faults, the following priors were used at the outset (at $t$ = 1 s):

$$\alpha_\omega^{(1)}, \alpha_\theta^{(1)} \sim \mathcal{TN}\,(1,1,1,\infty)$$

$$\alpha_\omega^{(2)}, \alpha_\theta^{(2)} \sim \mathcal{N}\,(0,1)$$

$$\alpha_\omega^{(3)}, \alpha_\theta^{(3)} \sim \mathcal{TN}\,(0,1,0,\infty)$$

These three prior distributions give a mode of 1, 0, and 0 for the gain, offset, and relative noise fault signatures respectively, which are the most likely values for healthy operation. The likelihood functions were given by the probability distribution function of a mixture of censored Gaussian distributions. Since $\mathcal{A}^{\mathcal{M}}$ gives deterministic estimates of $\omega'_{r_t}$ and $\theta'_t$ (given $u_t$ and $s_t$), the number of mixture components for method $\mathit{IM}$ is 1. Model $\mathcal{A}^{\mathcal{D}}$ gives probabilistic estimates of $\omega'_{r_t}$ and $\theta'_t$ (using Monte Carlo Dropout). 5 samples each of $\omega'_{r_t}$ and $\theta'_t\theta'_t$ were taken from the output distributions

$$p\big(\omega'_{r_t}\big|\,s_t, u_t; \mathcal{A}^{\mathcal{D}}_\omega\big)$$

and

$$p\big(\theta'_t\big|\,s_t, u_t; \mathcal{A}^{\mathcal{D}}_\theta\big)$$

predicted by

$$\mathcal{A}^{\mathcal{D}}_\omega$$

and

$$\mathcal{A}^{\mathcal{D}}_\theta$$

respectively, resulting in 5 mixture components for method $\mathit{ID}$.

d. Posterior distributions of fault signatures

Using the prior distributions, the likelihood functions, and the observed values of $\omega_{r_t}$ and $\theta_t$, two independent inference models were run - one to infer the posterior distribution for the sensor fault signatures and the other to infer the actuator fault signatures $\alpha_\theta^{(i)}$, 1, 2, 3. For each of the 100 faulty datasets (ideal or realistic), inference was implemented using the available data samples over a total period of 1-120s, split into two batches (1--60 s and 61--120 s). For the first batch, the prior distribution was the knowledge-driven one at $t$ = 1 s. Marginal posterior distributions for the fault signatures were estimated for each batch by Markov Chain Monte Carlo (MCMC) sampling using the Metropolis algorithm. Each run of the MCMC sampler had 3 chains with 20,000 burn-in (to allow the chain to converge to its stationary distribution) and 30,000 chosen samples (after the chain has converged) each. Thus, the sampled trace from all the chains has 90,000 samples for each fault signature that gives the estimated marginal posterior distribution for that signature. A Gaussian Kernel Density Estimator fit to these samples served as the prior distribution for the next batch that followed. This process continues till both the batches are used, eventually giving samples from estimates of

$$p\left(\alpha_\omega^{(i)} \mid \omega_{r_t}, s_t, u_t; \ \mathcal{A}_\omega, \mathcal{F}_\omega\right)$$

and

$$p\left(\alpha_\theta^{(i)} \mid \theta_t, s_t, u_t; \ \mathcal{A}_\theta, \mathcal{F}_\theta\right).$$

This complete inference approach was implemented using Python library for probabilistic programming PyMC.

e. Classification baseline,

The classifiers that are data-driven in nature have been predominantly used in literature for fault detection. Hence, a neural network-based binary (fault/no fault) classifier was developed as a baseline model. As wind turbine operational data were time-series, recurrent neural networks are the most suitable designs for building the classifiers as they use context from previous time indices while making predictions for a given time instant. Specifically, Gated Recurrent Unit (GRU)-based neural networks were used for the baseline model $\mathcal{B}$.

The same 100 simulated faulty datasets (ideal or realistic) that have been used to develop the Bayesian inference approaches were first split into training, validation and test sets, in the proportion of 40:10:50. Each training sample input to the GRU-neural network was a sequence spanning 120 s, which is the same as the total time period over which inference has been implemented by the Bayesian approaches. Two independent classifiers, one each for the rotor speed sensor ( $\mathcal{B}_\omega$ ) and the rotor pitch actuator ( $\mathcal{B}_\theta$ ) were built. For these classifiers, sensed values of 6 parameters, namely $u_t, \omega_{rt}, \tau_{rt}, \omega_{gt}, \tau_{gt}$, and $\theta_t$ are used as the input features. The output target was a class indicator from the set {0, 1}, in which Class 1 corresponds to the sensor/actuator being faulty while Class 0 represents the non-faulty case. The sensor/actuator is deemed faulty when any one of its fault signatures is beyond a user-defined acceptable fault tolerance. For the sake of demonstration, example tolerances were chosen such that:

$$\alpha_\omega^{(1)}, \alpha_\theta^{(1)} \in [0.5, 1.5], \ \alpha_\omega^{(2)} \in [-1.2, 1.2] \ rad/s, \ \alpha_\theta^{(2)} \in [-3, 3]^o, \ \alpha_\omega^{(3)} \in [0, 0.1], \alpha_\theta^{(3)} \in [0, 0.7]^o$$

correspond to fault-free signatures.

To train the GRU-neural network classifiers, samples of input feature time sequences in the training set were first fed to a GRU. For the realistic dataset, the GRU was preceded by a masking layer that masks the time instants where data samples were missing. The output of the GRU was a fixed-dimensional vector for each sample that embedded the information from the input time sequence for that sample. Next, the output of the GRU was fed to a downstream sequential neural network with one hidden layer followed by the final output layer. Table 5 shows the hyperparameters chosen for the GRU-neural network classifiers for the rotor speed sensor ($\mathcal{B}_\omega$) and the rotor pitch actuator ( $\mathcal{B}_\theta$). These hyperparameters are tuned on the held-out validation set.

| | Ideal dataset | | Realistic dataset | |
|---|---|---|---|---|
| | $\mathcal{B}_\omega$ | $\mathcal{B}_\theta$ | $\mathcal{B}_\omega$ | $\mathcal{B}_\theta$ |
| NN architecture | (20, 11, 1) | (20, 12, 1) | (20, 11, 1) | (15, 8, 1) |
| No. of training epochs | 55 | 200 | 115 | 200 |
| Target output | Class 0 (non-faulty)/1 (faulty) | | | |
| Input features | $u_t, \omega_{r_t}, \tau_{r_t}, \omega_{g_t}, \tau_{g_t}, \theta_t$ | | | |
| No. of training samples | 43,240 | | | |

Table 5: Details for training the baseline classifier $\mathcal{B}$ using GRU-neural networks on the ideal and realistic datasets. The NN architecture is represented by a tuple of number of nodes in (GRU-output, hidden, final output) layers.

(continued)

| Table 5: Details for training the baseline classifier $\mathcal{B}$ using GRU-neural networks on the ideal and realistic datasets. The NN architecture is represented by a tuple of number of nodes in (GRU-output, hidden, final output) layers. | | | | |
|---|---|---|---|
| | Ideal dataset | | Realistic dataset | |
| | $\mathcal{B}_\omega$ | $\mathcal{B}_\theta$ | $\mathcal{B}_\omega$ | $\mathcal{B}_\theta$ |
| No. of validation samples | 10,810 | | | |
| Mini-batch size | 864 | | | |
| Hidden/output activation | ReLU/sigmoid | | | |
| Loss function | Binary cross-entropy loss | | | |
| Optimizer (learning rate) | Adam (1e-4) | | | |

f. Evaluation metrics

This section discusses three metrics that were used to evaluate the inference approach used by the system 100. First two metrics have statistical rigor while the third one is a business metric.

i. Posterior Log Likelihood (PLL): This metric is only relevant to the inference methods $I\mathcal{M}$ and $I\mathcal{D}$ as their outputs are samples from the marginal posterior distribution for each fault signature. In order to evaluate how well the posterior distributions account for the true values of the respective signatures (which is known as all data are simulated), first Gaussian Kernel Density Estimators (KDE) are fit to these samples. KDE is a non-parametric statistical method used for estimating the underlying probability density function (PDF) of a continuous random variable using its samples. PLL is the logarithm of the probability density at the true value of the signature under this estimated PDF of the posterior distribution. The higher the PLL is, the better is the posterior distribution inference in terms of accounting for and explaining the true value of the signature.

ii. $F_1$ score: Standard $F_1$ score was used to evaluate the performance of all the three methods $I\mathcal{M}$, $I\mathcal{D}$, and     in a classification setting. For the two Bayesian approaches, the inferred distributions o fault signatures were first processed into fault (1)/no fault (0) class labels. The higher the $F_1$ score is the better is the classification performance.

iii. Fault Tolerant Control Percentage Error ($R_{FTC}$): A binary classification algorithm stops at labeling a given case under study as faulty/non-faulty. However, in practical terms, an FDD algorithm would fulfill its objects more effectively if its results could be applied immediately to course-correct a faulty operation, rather than having to await a full hardware repair/reset. Because the inference methods $I\mathcal{M}$ and $I\mathcal{D}$ provide samples of the inferred fault signatures, their outputs could be used to estimate the true values of the signals under study ( $\omega_r'$ and $\theta$'), which, in turn, could be utilized for course correction. Such a business utility of the proposed inference methods is demonstrated through a fault tolerant pitch control scheme. Such a scheme could improve the turbine energy output even in the presence of a faulty speed sensor or pitch actuator by 'rectifying' the faults in software. Briefly, the scheme uses samples of the inferred rotor speed sensor fault signatures to estimate the true rotor speed $\omega_r'$ from the faulty speed sensor output. The rotor PI pitch controller used these estimates to further estimate the desired pitch that should be actuated by the faulty pitch actuator. The fault tolerant scheme then used samples of the inferred rotor pitch actuator fault signatures to estimate the correct pitch $\theta$' that needed to be commanded. This estimate of the pitch was finally fed to the faulty actuator.

In order to evaluate the ability of the method 200 to improve the energy output through a fault tolerant control scheme, a metric referred to as Fault Tolerant Control Percentage Error, $R_{FTC}$ (%) was defined as:

$$R_{RFTC} = \left| \frac{E_H - E_S}{E_H} \right| X100$$

The ideal energy output $E_H$ occurs when the faults are completely rectified in hardware (i.e., a full repair of the faulty sensor/actuator). $R_{FTC}$ defined above is the absolute percentage error between the ideal energy $E_H$ and $E_S$ which was the energy output through fault tolerant control-based rectification in software. The lower the $R_{FTC}$ is, the better is the inference method in its ability to improve the turbine output relative to the ideal energy output.

Results: -

In this section, some key results from the evaluation of the different inference methods for both the ideal and realistic datasets, using different metrics, are discussed.

a. Posterior Log Likelihood (PLL)

To understand which method $I\mathcal{M}$ or $I\mathcal{D}$ gives statistically significantly better inference for each fault signature, 100 values of PLL (one for each of the 100 simulated faulty datasets) given by method $I\mathcal{M}$ on the ideal dataset need to be statistically compared with those given by method $I\mathcal{D}$ on the same dataset. Hypothesis testing can be used for such a pairwise comparison between the two inference methods. One-sided Wilcoxon signed-rank test was used for such a hypothesis testing. The null hypothesis is that method $I\mathcal{M}$ has a PLL lower than (or equal to) that from method $I\mathcal{D}$. The alternative hypothesis is that method $I\mathcal{M}$ has a PLL greater than that from method $I\mathcal{D}$. The output from the Wilcoxon test is a p-value. If the p-value is less than a predetermined significance level, then the null hypothesis is rejected and the alternative hypothesis is accepted. Otherwise, the null hypothesis cannot be rejected.

Table 6 shows the p-value resulting from the hypothesis testing explained above for each fault signature. From the p-values, it can be observed that for all six fault signatures on the ideal dataset, at a 5% significance level, method $I\mathcal{M}$ that uses analytical dynamics equations is statistically significantly better than method $I\mathcal{D}$ that uses neural networks to approximate dynamics. Thus, the inference follows the expected behavior of $I\mathcal{M}$ being better than $I\mathcal{D}$, thereby increasing confidence in the approach in method 200.

| Table 6: p-values from the one-sided Wilcoxon signed-rank test for pairwise comparison of inference methods $I\mathcal{M}$ and $I\mathcal{D}$ in terms of PLL. Null hypothesis $H_0$: $$PLL_{I\mathcal{M}} <= PLL_{I\mathcal{D}};$$ Alternative hypothesis $H_A$: $$PLL_{I\mathcal{M}} > PLL_{I\mathcal{D}}.$$ | |
| --- | --- |
| Fault signature | p-value |
| $\alpha_\omega^{(1)}$ | 3.7e-4 |
| $\alpha_\omega^{(2)}$ | 5.9e-4 |
| $\alpha_\omega^{(3)}$ | 2.1e-9 |
| $\alpha_\theta^{(1)}$ | 1.8e-8 |
| $\alpha_\theta^{(2)}$ | 1.2e-3 |
| $\alpha_\theta^{(3)}$ | 2.4e-13 |

b. Classification performance

The approach in method 200 gives the marginal posterior distribution of each fault signature. To use these methods in a binary classification setting where the fault signature can be classified as faulty (1) or not (0), its posterior distribution first needs to be compared with some fault tolerances.

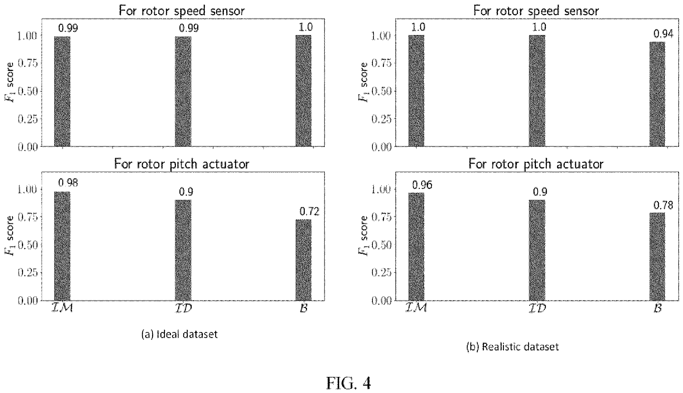

In the presence of predefined fault tolerances: When predefined fault tolerances were available (say from sensor/actuator manufacturers), they can be used to label the inferred fault signatures as faulty (1) or not (0). A signature for which more samples from its inferred posterior distribution are within (than outside) the limits defined by the tolerances is labeled as non-faulty. The sensor/actuator with even one signature faulty is marked as faulty overall. FIG. 4 shows the $F_1$ scores for different inference methods and the baseline classifier    for faulty/not faulty binary classification of the rotor speed sensor and the pitch actuator overall, computed on the 50 simulated faulty experiments comprising the test set that is neither used for training nor for validation of the classifier    . The same tolerances that have been used to train    were used here to mark the different fault signatures as faulty/non-faulty. It can be seen that on the ideal dataset, for the rotor speed sensor, the different inference methods have similar $F_1$ scores that are marginally lower (up to 1%) than the score for the baseline classifier    . However, for the rotor pitch actuator, both the inference methods improve on the baseline classifier by at least 25%. On the realistic dataset, the different inference methods improve on the baseline classifier by at least 6% for the rotor speed sensor, and at least 15% for the rotor pitch actuator. Thus, the proposed model-based inference methods were observed to be giving a better classification performance than a pure data-driven classifier showing that incorporating dynamics helps in inference in a classification setting too.

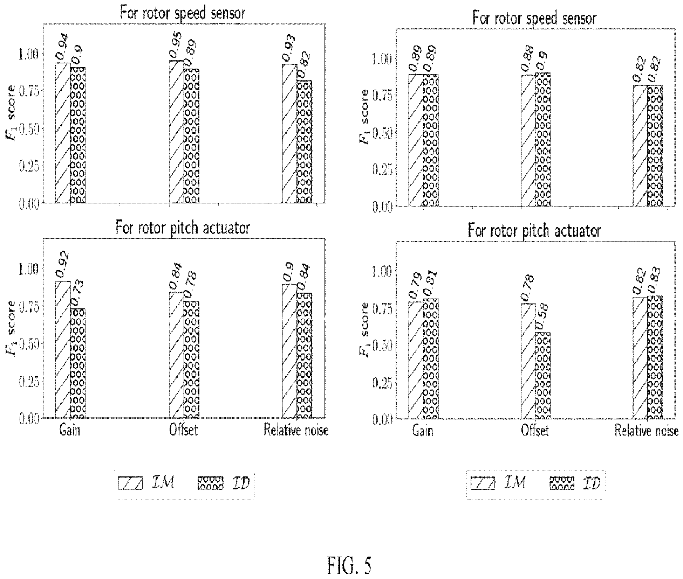

In the absence of predefined fault tolerances, the 95% confidence intervals of the posterior distributions can be used as inference-driven tolerances for fault detection. If the confidence interval includes the ideal value of a signature, then the inferred signature corresponds to a fault-free (predicted label 0) condition, else it represents faulty (predicted label 1) condition. As mentioned in Table 2, these ideal values are 1 for the gain, 0 for the offset, and 0 for the relative noise fault signatures. The true label of the fault signature is 0 if its true value equals the ideal value, else it is 1. $F_1$ score can then be used to compare the true and predicted labels. FIG. 5 shows the $F_1$ scores for different inference methods for faulty/not faulty binary classification of the fault signatures across all the 100 faulty experiments in each of the ideal and realistic datasets. The use of 95% confidence intervals as fault tolerances gave an $F_1$ score of at least 73% on the ideal and 58% on the realistic dataset. Thus, the Bayesian regression methods were inherently useful for fault detection too as they generate confidence intervals as a byproduct of the inference. These intervals can serve as tolerances for a fault detection solution.

Lastly, the inference methods give a lower $\mathcal{F}_1$ score for the actuator fault signatures than the corresponding sensor fault signatures in most cases, which could be a result of both upper and lower censoring for the pitch as compared to just lower censoring for the speed in the respective likelihood functions. Censoring can cause parameter non-identifiability leading to worse inference than that with no censoring.

c. Fault Tolerant Control Percentage Error ($R_{FTC}$)

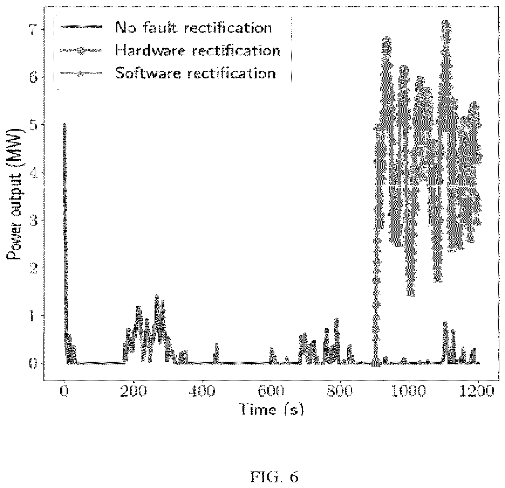

FIG. 6 shows, for a particular combination of fault signatures, the generator power output when the faults inferred by Bayesian inference (method $\mathcal{IM}$) are used for fault rectification in software. It also shows the power output when the faults are not rectified at all and when the faults are completely rectified in hardware. The faults were injected at $t = 1$ s and fault rectification (either in software or in hardware) began at $t = 900$ s. It can be seen from FIG. 6 that once fault rectification starts (either in hardware or software), the power output improves over the output when the faults are not rectified at all.

Hypothesis testing was used next to do a pairwise comparison of the different inference methods in terms of the $R_{FTC}$ business metric from $t = 900$ s to $t = 1200$ s for all the 100 faulty experiments in the ideal and realistic datasets. For the ideal dataset, the null hypothesis is that method $\mathcal{IM}$ has an $R_{FTC}$ greater than (or equal to) that from method $ID$. The alternative hypothesis was that method $\mathcal{IM}$ has an $R_{FTC}$ less than that from method $ID$. For the realistic dataset, the null hypothesis is that method $\mathcal{IM}$ has an $R_{FTC}$ equal to that from method $\mathcal{ID}$. The alternative hypothesis is that method $\mathcal{IM}$ has an $R_{FTC}$ not equal to that from method $\mathcal{ID}$. The Wilcoxon signed-rank test (one-sided for the ideal dataset and two-sided for the realistic dataset) is used for the hypothesis testing. Table 7 shows the resultant p-values. The table also shows the mean ($\pm$ one standard deviation of the) $R_{FTC}$ across the 100 experiments for the different methods. From the table, it can be seen that the fault tolerant pitch control scheme in software gets, on an average, within at most 57% of the ideal energy improvement possible through a complete fault repair in hardware on the ideal dataset and within at most 55% on the realistic dataset. Thus, the method 200 combined with fault tolerant control in software could give at least a partial improvement in energy output without needing a costly and time-consuming repair of the faulty sensor or actuator that can cause turbine downtime.

The results indicated that the method $\mathcal{ID}$ underperformed as compared to $\mathcal{IM}$ on the ideal dataset as $\mathcal{ID}$ gives

a statistically significantly greater $R_{FTC}$ (by 36% on average) than $_I\mathcal{M}$. The two inference methods were statistically indistinguishable in terms of the $R_{FTC}$ on the realistic dataset.

Table 7: Mean $R_{FTC}$, standard deviation of $R_{FTC}$, and $p$ -values from the Wilcoxon signed-rank test for pairwise comparison of inference methods $I$ and $I$ in terms of $R_{FTC}$. On the ideal dataset, null hypothesis $H_0$ :

$$R_{FTC_{I\mathcal{M}}} >= R_{FTC_{I\mathcal{D}}};$$ $H_0$ : >= ; and alternative hypothesis $H_A$ : <. On the realistic dataset, null hypothesis $H_0$ : = ; and alternative hypothesis $H_A$ : $\neq$ .

|  |  |  | Ideal dataset | Realistic dataset |
| --- | --- | --- | --- | --- |
|  | $_I\mathcal{M}$ | $_I\mathcal{D}$ | $_I\mathcal{M}$ | $_I\mathcal{D}$ |
| Mean $R_{FTC}$ (%) | 41.6 | 56.6 | 54.5 | 51.5 |
| Standard deviation of $R_{FTC}$ (%) | 35.2 | 30.0 | 36.1 | 34.8 |
| p-value | 7.5e-9 |  | 0.3 |  |

d. Summary of results

All the metrics indicated that, for the ideal dataset, using neural network approximation for dynamics worsens inference than using analytical dynamics equations due to an increased uncertainty in the estimates of the true rotor speed and commanded pitch. However, for the realistic dataset, the difference between the two inference methods is reduced due to the presence of real-world data issues. All the model-based inference methods were found to be better than a pure data-driven method of fault classification, thereby showing that incorporating dynamics helps in fault inference. The power of the Bayesian approach adopted by the system 100 is also highlighted by the usefulness of the 95% confidence intervals of the inferred posterior distributions as reasonable fault tolerances. Inference for the actuator fault signatures was found to be worse than that for the sensor fault signatures due to both lower and upper censoring leading to parameter non-identifiability. Lastly, the approach used in method 200 was found to be providing partial improvement in energy output via fault tolerant pitch control in software, without needing a complete repair in hardware.

The written description describes the subject matter herein to enable any person skilled in the art to make and use the embodiments. The scope of the subject matter embodiments is defined by the claims.

The embodiments of present disclosure herein address unresolved problem of fault analysis and diagnosis in wind turbine sensors and actuators. The embodiment, thus provides a Bayesian regression-based fault analysis in wind turbine sensors and actuators. Moreover, the embodiments herein further provide a mechanism for fault diagnosis using the Bayesian regression-based approach.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor implemented method (200), comprising:

    collecting (202), via one or more hardware processors (102), data from a wind turbine as input data;
    generating (204), via the one or more hardware processors, a plurality of prime values associated with one or more parameters of the input data, by processing the input data using a dynamics model, wherein the plurality of prime values are an estimate of actual values of the one or more parameters of the input data, **characterized in that**:

        determining (206) fault signature distributions by using a fault model by correlation of a measured value of the one or more parameters of the input data with associated prime values in presence of a plurality of fault signatures;
        determining a likelihood function (208), via the one or more hardware processors, wherein the likelihood function indicates probability of a measured value of one or more parameters given the associated prime values and fault signatures from the fault signature distributions;
        generating (210), using a Bayesian inference model via the one or more hardware processors, a posterior distribution by combining the likelihood function with initial prior distributions, wherein the posterior distribution is an update of the prior distribution in light of one or more new observations indicated in the likelihood function; and
        generating (212), via the one or more hardware processors, one or more fault signature distributions and associated magnitude and uncertainty, by processing the generated posterior distribution, wherein the one or more generated fault signature distributions is indicative of one or more probable faults in at least one of a sensor and actuator of the wind turbine.

2. The processor implemented method (200) as claimed in claim 1, wherein the input data comprises a plurality of state parameters, wind data, and measured values from at least one of the sensor and the actuator.

3. The processor implemented method (200) as claimed in claim 1, wherein the one or more fault signature distributions capture a plurality of different types of faults associated with at least one of a sensor or actuator of the wind turbine.

4. The processor implemented method (200) as claimed in claim 1, wherein the one or more probable faults are in one or more sensors or actuators of the wind turbine.

5. A system (100), comprising:

    one or more hardware processors (102);
    a communication interface (112); and
    a memory (104) storing a plurality of instructions, wherein the plurality of instructions cause the one or more hardware processors to:

        collect data from a wind turbine as input data;
        generate a plurality of prime values associated with one or more parameters of the input data, by processing the input data using a dynamics model, wherein the plurality of prime values are an estimate of actual values of the one or more parameters of the input data,
        **characterized in that**:

            determine fault signature distributions by using a fault model by correlation of a measured value of the one or more parameters of the input data with associated prime values in presence of a plurality of fault signatures;

determine a likelihood function, wherein the likelihood function indicates probability of a measured value of one or more parameters given the associated prime values and fault signatures from the fault signature distributions;

generate, using a Bayesian inference model, a posterior distribution by combining the likelihood function with initial prior distributions, wherein the posterior distribution is an update of the prior distribution in light of one or more new observations indicated in the likelihood function; and

generate one or more fault signature distributions and associated magnitude and uncertainty, by processing the generated posterior distribution, wherein the one or more generated fault signature distributions is indicative of one or more probable faults in at least one of a sensor and actuator of the wind turbine.

6. The system (100) as claimed in claim 5, wherein the input data comprises a plurality of state parameters, wind data, and measured values from at least one of the sensor and the actuator.

7. The system (100) as claimed in claim 5, wherein the one or more fault signature distributions capture a plurality of different types of faults associated with at least one of a sensor or actuator of the wind turbine.

8. The system (100) as claimed in claim 5, wherein the one or more probable faults are in one or more sensors or actuators of the wind turbine.

9. One or more non-transitory machine-readable information storage mediums comprising one or more instructions which when executed by one or more hardware processors cause:

collecting, via one or more hardware processors (102), data from a wind turbine as input data;

generating, via the one or more hardware processors, a plurality of prime values associated with one or more parameters of the input data, by processing the input data using a dynamics model, wherein the plurality of prime values are an estimate of actual values of the one or more parameters of the input data, **characterized in that**:

determining fault signature distributions by using a fault model by correlation of a measured value of the one or more parameters of the input data with associated prime values in presence of a plurality of fault signatures;

determining a likelihood function, via the one or more hardware processors, wherein the likelihood function indicates probability of a measured value of one or more parameters given the associated prime values and fault signatures from the fault signature distributions;

generating, using a Bayesian inference model via the one or more hardware processors, a posterior distribution by combining the likelihood function with initial prior distributions, wherein the posterior distribution is an update of the prior distribution in light of one or more new observations indicated in the likelihood function; and

generating, via the one or more hardware processors, one or more fault signature distributions and associated magnitude and uncertainty, by processing the generated posterior distribution, wherein the one or more generated fault signature distributions is indicative of one or more probable faults in at least one of a sensor and actuator of the wind turbine.

10. The one or more non-transitory machine readable information of claim 9, wherein the input data comprises a plurality of state parameters, wind data, and measured values from at least one of the sensor and the actuator.

11. The one or more non-transitory machine readable information of claim 9, wherein the one or more fault signature distributions capture a plurality of different types of faults associated with at least one of a sensor or actuator of the wind turbine.

12. The one or more non-transitory machine readable information of claim 9, wherein the one or more probable faults are in one or more sensors or actuators of the wind turbine.

**Patentansprüche**

1. Prozessorimplementiertes Verfahren (200), umfassend:

   Sammeln (202), über einen oder mehrere Hardwareprozessoren (102), von Daten von einer Windturbine als Eingangsdaten;
   Erzeugen (204), über den einen oder die mehreren Hardwareprozessoren, einer Mehrzahl von Primwerten, die mit einem oder mehreren Parametern der Eingangsdaten assoziiert sind, durch Verarbeiten der Eingangsdaten unter Verwendung eines Dynamikmodells, wobei die Mehrzahl von Primwerten eine Schätzung von tatsächlichen Werten des einen oder der mehreren Parameter der Eingangsdaten ist, **dadurch gekennzeichnet, dass**:

   Bestimmen (206) von Fehlersignaturverteilungen durch Verwenden eines Fehlermodells durch Korrelation eines Messwerts des einen oder der mehreren Parameter der Eingangsdaten mit assoziierten Primwerten im Vorhandensein einer Mehrzahl von Fehlersignaturen;
   Bestimmen einer Wahrscheinlichkeitsfunktion (208), über den einen oder die mehreren Hardwareprozessoren, wobei die Wahrscheinlichkeitsfunktion eine Wahrscheinlichkeit eines Messwerts eines oder mehrerer Parameter angibt, wenn die assoziierten Primwerte und Fehlersignaturen aus den Fehlersignaturverteilungen gegeben sind;
   Erzeugen (210), unter Verwendung eines Bayes'schen Inferenzmodells über den einen oder die mehreren Hardwareprozessoren, einer posterioren Verteilung durch Kombinieren der Wahrscheinlichkeitsfunktion mit anfänglichen vorherigen Verteilungen, wobei die posteriore Verteilung eine Aktualisierung der vorherigen Verteilung angesichts einer oder mehrerer neuer Beobachtungen ist, die in der Wahrscheinlichkeitsfunktion angegeben sind; und
   Erzeugen (212), über den einen oder die mehreren Hardwareprozessoren, einer oder mehrerer Fehlersignaturverteilungen und assoziierter Größe und Unsicherheit durch Verarbeiten der erzeugten posterioren Verteilung, wobei die eine oder die mehreren erzeugten Fehlersignaturverteilungen einen oder mehrere wahrscheinliche Fehler in mindestens einem von einem Sensor und einem Aktor der Windturbine angeben.

2. Prozessorimplementiertes Verfahren (200) nach Anspruch 1, wobei die Eingangsdaten eine Mehrzahl von Zustandsparametern, Winddaten und Messwerten von mindestens einem von dem Sensor und dem Aktor umfassen.

3. Prozessorimplementiertes Verfahren (200) nach Anspruch 1, wobei die eine oder die mehreren Fehlersignaturverteilungen eine Mehrzahl von verschiedenen Typen von Fehlern erfassen, die mit mindestens einem von einem Sensor oder einem Aktor der Windturbine assoziiert sind.

4. Prozessorimplementiertes Verfahren (200) nach Anspruch 1, wobei der eine oder die mehreren wahrscheinlichen Fehler in einem oder mehreren Sensoren oder Aktoren der Windturbine sind.

5. System (100), umfassend:

   einen oder mehrere Hardwareprozessoren (102);
   eine Kommunikationsschnittstelle (112); und
   einen Speicher (104), der eine Mehrzahl von Anweisungen speichert, wobei die Mehrzahl von Anweisungen den einen oder die mehreren Hardwareprozessoren zu Folgendem veranlassen:

   Sammeln von Daten von einer Windturbine als Eingangsdaten;
   Erzeugen einer Mehrzahl von Primwerten, die mit einem oder mehreren Parametern der Eingangsdaten assoziiert sind, durch Verarbeiten der Eingangsdaten unter Verwendung eines Dynamikmodells, wobei die Mehrzahl von Primwerten eine Schätzung von tatsächlichen Werten des einen oder der mehreren Parameter der Eingangsdaten ist, **dadurch gekennzeichnet, dass**:

   Bestimmen von Fehlersignaturverteilungen durch Verwenden eines Fehlermodells durch Korrelation eines Messwerts des einen oder der mehreren Parameter der Eingangsdaten mit assoziierten Primwerten im Vorhandensein einer Mehrzahl von Fehlersignaturen;
   Bestimmen einer Wahrscheinlichkeitsfunktion, wobei die Wahrscheinlichkeitsfunktion eine Wahrscheinlichkeit eines Messwerts eines oder mehrerer Parameter angibt, wenn die assoziierten Primwerte und Fehlersignaturen aus den Fehlersignaturverteilungen gegeben sind;
   Erzeugen, unter Verwendung eines Bayes'schen Inferenzmodells, einer posterioren Verteilung durch Kombinieren der Wahrscheinlichkeitsfunktion mit anfänglichen vorherigen Verteilungen, wobei die posteriore Verteilung eine Aktualisierung der vorherigen Verteilung angesichts einer oder mehrerer neuer Beobachtungen ist, die in der Wahrscheinlichkeitsfunktion angegeben sind; und

Erzeugen einer oder mehrerer Fehlersignaturverteilungen und assoziierter Größe und Unsicherheit durch Verarbeiten der erzeugten posterioren Verteilung, wobei die eine oder die mehreren erzeugten Fehlersignaturverteilungen einen oder mehrere wahrscheinliche Fehler in mindestens einem von einem Sensor und einem Aktor der Windturbine angeben.

6. System (100) nach Anspruch 5, wobei die Eingangsdaten eine Mehrzahl von Zustandsparametern, Winddaten und Messwerten von mindestens einem von dem Sensor und dem Aktor umfassen.

7. System (100) nach Anspruch 5, wobei die eine oder die mehreren Fehlersignaturverteilungen eine Mehrzahl von verschiedenen Typen von Fehlern erfassen, die mit mindestens einem von einem Sensor oder einem Aktor der Windturbine assoziiert sind.

8. System (100) nach Anspruch 5, wobei der eine oder die mehreren wahrscheinlichen Fehler in einem oder mehreren Sensoren oder Aktoren der Windturbine sind.

9. Ein oder mehrere nichtflüchtige maschinenlesbare Informationsspeichermedien, umfassend eine oder mehrere Anweisungen, die bei Ausführung durch einen oder mehrere Hardwareprozessoren Folgendes veranlassen:

Sammeln, über einen oder mehrere Hardwareprozessoren (102), von Daten von einer Windturbine als Eingangsdaten;

Erzeugen, über den einen oder die mehreren Hardwareprozessoren, einer Mehrzahl von Primwerten, die mit einem oder mehreren Parametern der Eingangsdaten assoziiert sind, durch Verarbeiten der Eingangsdaten unter Verwendung eines Dynamikmodells, wobei die Mehrzahl von Primwerten eine Schätzung von tatsächlichen Werten des einen oder der mehreren Parameter der Eingangsdaten ist, **dadurch gekennzeichnet, dass**:

Bestimmen von Fehlersignaturverteilungen durch Verwenden eines Fehlermodells durch Korrelation eines Messwerts des einen oder der mehreren Parameter der Eingangsdaten mit assoziierten Primwerten im Vorhandensein einer Mehrzahl von Fehlersignaturen;

Bestimmen einer Wahrscheinlichkeitsfunktion, über den einen oder die mehreren Hardwareprozessoren, wobei die Wahrscheinlichkeitsfunktion eine Wahrscheinlichkeit eines Messwerts eines oder mehrerer Parameter angibt, wenn die assoziierten Primwerte und Fehlersignaturen aus den Fehlersignaturverteilungen gegeben sind;

Erzeugen, unter Verwendung eines Bayes'schen Inferenzmodells über den einen oder die mehreren Hardwareprozessoren, einer posterioren Verteilung durch Kombinieren der Wahrscheinlichkeitsfunktion mit anfänglichen vorherigen Verteilungen, wobei die posteriore Verteilung eine Aktualisierung der vorherigen Verteilung angesichts einer oder mehrerer neuer Beobachtungen ist, die in der Wahrscheinlichkeitsfunktion angegeben sind; und

Erzeugen, über den einen oder die mehreren Hardwareprozessoren, einer oder mehrerer Fehlersignaturverteilungen und assoziierter Größe und Unsicherheit durch Verarbeiten der erzeugten posterioren Verteilung, wobei die eine oder die mehreren erzeugten Fehlersignaturverteilungen einen oder mehrere wahrscheinliche Fehler in mindestens einem von einem Sensor und einem Aktor der Windturbine angeben.

10. Eine oder mehrere nichtflüchtige maschinenlesbare Informationen nach Anspruch 9, wobei die Eingangsdaten eine Mehrzahl von Zustandsparametern, Winddaten und Messwerten von mindestens einem von dem Sensor und dem Aktor umfassen.

11. Eine oder mehrere nichtflüchtige maschinenlesbare Informationen nach Anspruch 9, wobei die eine oder die mehreren Fehlersignaturverteilungen eine Mehrzahl von verschiedenen Typen von Fehlern erfassen, die mit mindestens einem von einem Sensor oder einem Aktor der Windturbine assoziiert sind.

12. Eine oder mehrere nichtflüchtige maschinenlesbare Informationen nach Anspruch 9, wobei der eine oder die mehreren wahrscheinlichen Fehler in einem oder mehreren Sensoren oder Aktoren der Windturbine sind.

**Revendications**

1.  Procédé mis en œuvre par processeur (200), comprenant :

    la collecte (202), via un ou plusieurs processeurs matériels (102), de données provenant d'une éolienne en tant que données d'entrée ;
    la génération (204), via les un ou plusieurs processeurs matériels, d'une pluralité de valeurs estimées associées à un ou plusieurs paramètres des données d'entrée, en traitant les données d'entrée en utilisant un modèle dynamique, dans lequel la pluralité de valeurs estimées est une estimation de valeurs réelles des un ou plusieurs paramètres des données d'entrée, **caractérisé en ce que** :

    la détermination (206) de distributions de signatures de défaut en utilisant un modèle de défaut par corrélation d'une valeur mesurée des un ou plusieurs paramètres des données d'entrée avec des valeurs estimées associées en présence d'une pluralité de signatures de défaut ;
    la détermination d'une fonction de vraisemblance (208), via les un ou plusieurs processeurs matériels, dans lequel la fonction de vraisemblance indique une probabilité d'une valeur mesurée d'un ou plusieurs paramètres compte tenu des valeurs estimées associées et des signatures de défaut provenant des distributions de signatures de défaut ;
    la génération (210), en utilisant un modèle d'inférence bayésienne via les un ou plusieurs processeurs matériels, d'une distribution postérieure en combinant la fonction de vraisemblance avec des distributions a priori initiales, dans lequel la distribution postérieure est une mise à jour de la distribution antérieure à la lumière d'une ou plusieurs nouvelles observations indiquées dans la fonction de vraisemblance ; et
    la génération (212), via les un ou plusieurs processeurs matériels, d'une ou plusieurs distributions de signatures de défaut et d'une amplitude et d'une incertitude associées, en traitant la distribution postérieure générée, dans lequel les une ou plusieurs distributions de signatures de défaut générées sont indicatives d'un ou plusieurs défauts probables dans au moins l'un d'un capteur et d'un actionneur de l'éolienne.

2.  Procédé mis en œuvre par processeur (200) selon la revendication 1, dans lequel les données d'entrée comprennent une pluralité de paramètres d'état, de données de vent, et de valeurs mesurées provenant d'au moins l'un du capteur et de l'actionneur.

3.  Procédé mis en œuvre par processeur (200) selon la revendication 1, dans lequel les une ou plusieurs distributions de signatures de défaut capturent une pluralité de types différents de défauts associés à au moins l'un d'un capteur ou d'un actionneur de l'éolienne.

4.  Procédé mis en œuvre par processeur (200) selon la revendication 1, dans lequel les un ou plusieurs défauts probables sont dans un ou plusieurs capteurs ou actionneurs de l'éolienne.

5.  Système (100), comprenant :

    un ou plusieurs processeurs matériels (102) ;
    une interface de communication (112) ; et
    une mémoire (104) stockant une pluralité d'instructions, dans lequel la pluralité d'instructions amènent les un ou plusieurs processeurs matériels à :

    collecter des données provenant d'une éolienne en tant que données d'entrée ;
    générer une pluralité de valeurs estimées associées à un ou plusieurs paramètres des données d'entrée, en traitant les données d'entrée en utilisant un modèle dynamique, dans lequel la pluralité de valeurs estimées est une estimation de valeurs réelles des un ou plusieurs paramètres des données d'entrée, **caractérisé en ce que** :

    déterminer des distributions de signatures de défaut en utilisant un modèle de défaut par corrélation d'une valeur mesurée des un ou plusieurs paramètres des données d'entrée avec des valeurs estimées associées en présence d'une pluralité de signatures de défaut ;
    déterminer une fonction de vraisemblance, dans lequel la fonction de vraisemblance indique une probabilité d'une valeur mesurée d'un ou plusieurs paramètres compte tenu des valeurs estimées associées et des signatures de défaut provenant des distributions de signatures de défaut ;
    générer, en utilisant un modèle d'inférence bayésienne, une distribution postérieure en combinant la fonction de vraisemblance avec des distributions a priori initiales, dans lequel la distribution postérieure est une mise à jour de la distribution antérieure à la lumière d'une ou plusieurs nouvelles observations indiquées dans la fonction de vraisemblance ; et

générer une ou plusieurs distributions de signatures de défaut et une amplitude et une incertitude associées, en traitant la distribution postérieure générée, dans lequel les une ou plusieurs distributions de signatures de défaut générées sont indicatives d'un ou plusieurs défauts probables dans au moins l'un d'un capteur et d'un actionneur de l'éolienne.

6.  Système (100) selon la revendication 5, dans lequel les données d'entrée comprennent une pluralité de paramètres d'état, de données de vent, et de valeurs mesurées provenant d'au moins l'un du capteur et de l'actionneur.

7.  Système (100) selon la revendication 5, dans lequel les une ou plusieurs distributions de signatures de défaut capturent une pluralité de types différents de défauts associés à au moins l'un d'un capteur ou d'un actionneur de l'éolienne.

8.  Système (100) selon la revendication 5, dans lequel les un ou plusieurs défauts probables sont dans un ou plusieurs capteurs ou actionneurs de l'éolienne.

9.  Un ou plusieurs supports de stockage d'informations lisibles par machine non transitoires comprenant une ou plusieurs instructions qui, lorsqu'elles sont exécutées par un ou plusieurs processeurs matériels, amènent :

la collecte, via un ou plusieurs processeurs matériels (102), de données provenant d'une éolienne en tant que données d'entrée ;

la génération, via les un ou plusieurs processeurs matériels, d'une pluralité de valeurs estimées associées à un ou plusieurs paramètres des données d'entrée, en traitant les données d'entrée en utilisant un modèle dynamique, dans lequel la pluralité de valeurs estimées est une estimation de valeurs réelles des un ou plusieurs paramètres des données d'entrée, **caractérisé en ce que** :

la détermination de distributions de signatures de défaut en utilisant un modèle de défaut par corrélation d'une valeur mesurée des un ou plusieurs paramètres des données d'entrée avec des valeurs estimées associées en présence d'une pluralité de signatures de défaut ;

la détermination d'une fonction de vraisemblance, via les un ou plusieurs processeurs matériels, dans lequel la fonction de vraisemblance indique une probabilité d'une valeur mesurée d'un ou plusieurs paramètres compte tenu des valeurs estimées associées et des signatures de défaut provenant des distributions de signatures de défaut ;

la génération, en utilisant un modèle d'inférence bayésienne via les un ou plusieurs processeurs matériels, d'une distribution postérieure en combinant la fonction de vraisemblance avec des distributions a priori initiales, dans lequel la distribution postérieure est une mise à jour de la distribution antérieure à la lumière d'une ou plusieurs nouvelles observations indiquées dans la fonction de vraisemblance ; et

la génération, via les un ou plusieurs processeurs matériels, d'une ou plusieurs distributions de signatures de défaut et d'une amplitude et d'une incertitude associées, en traitant la distribution postérieure générée, dans lequel les une ou plusieurs distributions de signatures de défaut générées sont indicatives d'un ou plusieurs défauts probables dans au moins l'un d'un capteur et d'un actionneur de l'éolienne.

10. Un ou plusieurs supports de stockage d'informations lisibles par machine non transitoires selon la revendication 9, dans lesquelles les données d'entrée comprennent une pluralité de paramètres d'état, de données de vent, et de valeurs mesurées provenant d'au moins l'un du capteur et de l'actionneur.

11. Un ou plusieurs supports de stockage d'informations lisibles par machine non transitoires selon la revendication 9, dans lesquelles les une ou plusieurs distributions de signatures de défaut capturent une pluralité de types différents de défauts associés à au moins l'un d'un capteur ou d'un actionneur de l'éolienne.

12. Un ou plusieurs supports de stockage d'informations lisibles par machine non transitoires selon la revendication 9, dans lesquelles les un ou plusieurs défauts probables sont dans un ou plusieurs capteurs ou actionneurs de l'éolienne.

100

108

MEMORY 104

MODULES 106

REPOSITORY 110

I/O INTERFACE
112

HARDWARE
PROCESSORS 102

FIG. 1

collecting, via one or more hardware processors, data from a wind
turbine as input data

202

generating, via the one or more hardware processors, a plurality of
prime values associated with one or more parameters of the input data,
by processing the input data using a dynamics model, wherein the
plurality of prime values are an estimate of actual values of the one or
more parameters of the input data

204

determining, using a fault model via the one or more hardware
processors, correlation of a measured value of the one or more
parameters of the input data with the associated prime values in
presence of a plurality of fault signatures

206

determining a likelihood function, via the one or more hardware
processors, wherein the likelihood function indicates probability of the
measured value of the one or more parameters given the associated
prime values and fault signatures

208

generating, using a Bayesian inference model via the one or more
hardware processors, a posterior information by combining the
likelihood function with a prior information, wherein the posterior
information is an updation of the prior information in light of one or
more new observations indicated in the likelihood function

210

generating, via the one or more hardware processors, one or more fault
signature distributions and associated magnitude and uncertainty, by
processing the generated posterior information, wherein the one or
more fault signature distributions is indicative of one or more probable
faults in at least one of a sensor and actuator of the wind turbine

212

200

FIG. 2

System 100

FIG. 3

(a) Ideal dataset

(b) Realistic dataset

FIG. 4

FIG. 5

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421000058

- JP 5284503 B